Europäisches Patentamt

European Patent Office

Office européen des brevets

(11) Publication number: **0 301 676 B1**

## EUROPEAN PATENT SPECIFICATION

(45) Date of publication of patent specification: **13.01.93**

(51) Int. Cl.⁵: **B65D 65/38**, C08L 23/10, C08K 5/09, //(C08L23/10, C08K5:09)

(21) Application number: **88302949.8**

(22) Date of filing: **31.03.88**

(54) Degradable beverage container.

(30) Priority: **31.07.87 US 80125**
**31.07.87 US 80127**

(43) Date of publication of application:
**01.02.89 Bulletin 89/05**

(45) Publication of the grant of the patent:
**13.01.93 Bulletin 93/02**

(84) Designated Contracting States:
**AT BE CH DE ES FR GB GR IT LI LU NL SE**

(56) References cited:
**EP-A- 0 221 659**
**US-A- 3 994 855**
**US-A- 4 038 228**
**US-A- 4 181 239**
**US-A- 4 640 853**

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **Michaels, Nicholas**
**12439 Honeywood Trail**
**Houston Texas 77077(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a sealed, beverage container which degrades only after opening. It comprises a plastics shell and contains a carbonated beverage which provides a carbon dioxide pressure sufficient to retard degradation.

Plastics are used for virtually every sort of packaging. During the last few years, plastics have been used in the packaging industry to replace many paper, cardboard, metal and glass packages with lightweight, chemically resistant, relatively unbreakable, translucent or transparent plastics packaging.

However, unlike some other packaging materials such as cardboard and paper, plastics degrade only very slowly unless assisted by more than nature. Thus, burying a plastics container is not a satisfactory solution to the problem of how to dispose of it after use.

A satisfactorily degradable container is one which degrades within a year. Degradation can be brought about by, for example, exposure to sunlight (when the use of degradants is not required) or by the incorporation of a degradant in a plastics material.

It is known to add a degradant to a plastics material to accomplish degradation in the presence of air and light. "Degradant" is defined to mean a compound which promotes oxidative decomposition of the plastics material to which it is added. US-A-3,847,852 describes the use of silica or a prodegradant metal compound such as a fatty acid metal salt of Al, Sn, Pb, Sb, Bi or Groups IIA or IIB metals. US-A-3,896,585 discloses a degradable agricultural mulch comprising a film or polybutylene-1 or polypropylene containing a stabilizer and a degradable composition comprising an ethylene base polymer and a combination of an auto-oxidative polymer or low molecular weight organic compound, certain polyvalent transition metal salts and an antioxidant additive. US-A-3,994,855 discloses a degradable polymer composition containing a photolyzable metal compound which promotes degradation and is present in an extremely finely divided state. US-A-4,038,228 discloses a degradable plastics composition which is degradable in the absence of electromagnetic radiation and consists essentially of an organic polymer having dispersed therein at least one transition-metal derivative of at least one highly unsaturated organic acid. US-A-4,056,499 reacts a polymer and a non-polymer organic reagent to promote degradation. Likewise, US-A-4,048,410 combines an organic polymer and an organic chelating agent to promote degradation. US-A-4,101,720 uses a polymer, an organic derivative of a transition metal and a readily antioxidizable organic compound to provide a degradable composition. Finally, US-A-4,121,025 uses a non-ionic, organo-soluble complex of a metal to cause degradation of a polymer at the end of its desired life.

It is also known to stabilize a plastics material, even a plastics containing a degradant, and thereby prevent degradation, using certain stabilizer materials such as antioxidants. However, as long as the antioxidant is present there can be no degradation. A volatile antioxidant with a known half life might permit degradation at some future time, but one would not be able precisely to determine the onset of degradation so as, for example, to provide an acceptable shelf life while yet ensuring the onset of degradation as soon as possible following use.

The use of plastics for food and beverage packaging gives rise to the need for a container, more particularly a carbonated beverage container, which will remain stable and resist degradation during a variable and unpredictable shelf life in warehouses, trucks, supermarkets, at home or elsewhere, until removal of the beverage, and yet will begin to degrade immediately after it has been opened.

The invention accordingly provides a sealed container which is at least 80% by volume full of a carbonated beverage, the amount of carbonation of said beverage being sufficient to provide a carbon dioxide pressure of at least 78 kPa (0.8 atm) within said container, which container comprises a degradable plastics shell wherein the oxygen and carbon dioxide permeability of at least the outer portion of the shell is below 200 cm$^3$ x 25 $\mu$m/654 cm$^2$ x day x bar (200 cm$^3$ x mil/100 sq.in x day x atm) and the oxygen and carbon dioxide permeability of said shell is at least 0.7 cm$^3$ x 25 $\mu$m/654 cm$^2$ x day x bar (0.7 cm$^3$ x mil/100 sq.in x day x atm). The plastics shell can be of a material such as polypropylene, that can degrade upon exposure to the atmosphere or can contain a degradant that becomes operative once the carbonated beverage is removed from the container.

The container of the invention only degrades after opening, even after a variable and unpredictable shelf life.

The present invention thus relates in one embodiment to a sealed, degradable, plastics container having a carbonated beverage therein and which comprises a plastics shell and an effective amount of a degradant which will promote substantial degradation of the container after use, that is after the beverage has been consumed and the inside of the container has been exposed to the atmosphere.

A carbonated beverage is contained within the container, the carbonation of the beverage being sufficient to provide a carbon dioxide pressure of at least 78 kPa (0.8 atm), preferably at least 98 kPa (0.1

2

atm), within the container.

The container may comprise at least one layer of plastics, such as polypropylene, with a consistent permeability (Px) throughout. Alternatively the container can comprise a shell having an inner layer of a plastics of permeability (Px) and a contiguous outer layer of a plastics of permeability (Py), which outer layer is of very low permeability and is a barrier layer of a different plastics, or is an outer layer of the same plastics, where Py < Px and where Px is no greater than 500 cm$^3$ x 25 $\mu$m/654 cm$^2$ x day x bar (500 cm$^3$ x mil/100 sq in x day x atm). The oxygen permeability of at least the outer portion of the plastic shell is below 200 cm$^3$ x 25 $\mu$m/654 cm$^2$ x day x bar (200 cm$^3$ x mil/100 sq in x day x atm). The thickness of the outer portion is not critical as long as the container is able to maintain its shape. A typical outer portion of the shell might comprise no more than 10% of the thickness of the entire shell.

The container of the invention is stable, i.e. it does not degrade, as long as a positive pressure at least 78 kPa (0.8 atm) of carbon dioxide is maintained on at least the inside wall of the container. Degradation is initiated when the carbonated beverage is consumed, thus displacing carbon dioxide by air and contacting the inside wall of the container with oxygen contained in the air. The decomposition of the container can thus be delayed to provide for a variable and unpredictable shelf life, being initiated only upon opening the container. After the container has been opened, $CO_2$ is released and at least partially displaced by oxygen from the atmosphere, and the oxygen permeates onto and through at least the container's inside wall, thus ending the period of stability, and initiating oxidative degradation, which may be promoted if a degradant is contained in the plastics material. Exposure to light or thermal energy enables the container to degrade at a faster rate.

The plastics may be, for example, polypropylene, polybutylene or polyethylene terephthalate (PET). The chemical nature of the plastics used for at least the inner layer is not important as long as the plastics can be degraded, meets permeability requirements and is strong enough to hold its shape.

For example, a polypropylene which could be employed for the carbonated beverage container is the so-called isotactic polypropylene (as opposed to atactic polypropylene). This polypropylene is described in Kirk-Othmer Encyclopedia of Chemical Technology, Volume 14, pages 217-335 (1967) and in US-A-3,112,300. The polypropylene of suitable average molecular weight for this invention may be prepared using methods well known in the art. Depending on the specific catalyst and polymerization conditions employed, the polymer produced will contain various proportions of atactic as well as isotactic, syndiotactic or so-called stereo-block molecules. These proportions may be adjusted, if desired, to yield products that crystallize more or less completely. The preferred commercial polypropylenes are generally prepared using a solid, crystalline, hydrocarbon-insoluble catalyst made from a titanium trichloride composition and an aluminum alkyl compound, e.g. triethyl aluminum or diethyl aluminum chloride. If desired, the polypropylene employed may be a copolymer containing minor (1 to 20 percent by weight) amounts of ethylene or other alpha-olefin comonomers. Also included are impact polypropylenes, which structures are well known in the art. Such impact polypropylenes include sequentially polymerized propylene-ethylene copolymers, which may be produced by sequential polymerization of propylene and propylene-ethylene mixures by contact with Ziegler-Natta coordination catalysts. Newer types of coordination catalysts, such as compositions of $TiCl_4$ supported on magnesium chloride and modified with an electron donor, may also be used. As used herein, the propylene homopolymers and copolymers should contain at least 60% by weight propylene units. During any processing or extrusion of any unstabilized plastics, it may be desirable to process and extrude the plastics under an inert gas environment such as nitrogen or carbon dioxide to prevent premature degradation.

The plastics may optionally contain chemical additives, fillers, processing aids, viscosity depressants, mold-release agents, emulsifiers, slip agents, anti-static agents, fibrous reinforcements, flame retardants, plasticizers, dyes, pigments and/or adhesion promoters. Any such additives should be non-toxic and suitable for use with carbonated beverages.

The amount of any degradant to be used should be independent of the carbonation and concentration of the beverage in the sealed container. An amount of degradant which is effective to initiate degradation of the container once it has been opened should be used. The container should, however, degrade to a significant extent only after a reasonable period of time during which the consumer may use or temporarily store the opened container.

The amount of degradant may be varied to give the opened container a desired useful life before it degrades. It should be an amount sufficient to promote photooxidative degradation of the container. Too little degradant results in too slow degradation. Too much results in problems processing the plastics.

The degradant may be any compound which promotes photooxidative decomposition of the plastics to which it is added. A preferred degradant is a cerium salt of a monobasic carboxylic acid, such as cerium tristearate. Cerium salts of a monobasic carboxylic acid have a low order of toxicity, are non-mutagenic, and chronic exposure studies indicate no human health problems. They are regulated under the good manufacturing practices (GMP) and may be used for contact in fatty and nonfatty food applications. Examples of such cerium salts include the cerium salts of stearic acid, gluconic acid, racemic acid, glyoxylic acid hydrate, lactic acid, 2-hydroxybutyric acid and other carboxylic and hydrocarboxylic acids. A particularly preferred salt is cerium tristearate.

Other suitable degradants include (1) transition metal salts, such as iron, chromium, or copper stearates, octoates or naphthanates, (2) a copolymer of carbon monoxide and an olefin, (3) a copolymer of an olefin and a vinyl ketone, (4) aromatic ketones, (5) naphthylamines and (6) benzothiazole derivatives.

The optimum amount of degradant depends upon the particular degradant used. An amount of degradant is used which is sufficient to achieve the desired degradation rate. Typical amounts range from 100 parts per million to 10,000 parts per million by weight of said plastics, and preferably from 1,000 to 5,000 ppm.

The container of this invention may comprise only a single layer of plastics and may be prepared by heating the plastics at a temperature below its decomposition temperature, optionally incorporating a degradant and any other desired additives and mixing the ingredients so as to obtain a substantially uniform mixture, extruding, optionally injection molding, and cooling to form a solid container shell. The degradant and any other additives may be blended into the plastic by a mixer. The degradant is added in an amount sufficient to promote degradation but not so much as to cause processing problems. Compression molded films and/or extruded films can then be made. Extrusion may be made up to about 230°C (450°F) without a nitrogen purge.

The container may also be made of an inner layer with a consistent oxygen and carbon dioxide permeability (Px) throughout, and an outer layer which is a barrier layer, or which is an outer layer of the same plastics with an oxygen and carbon dioxide permeability (Py), where Py < Px is no greater than 500 $cm^3$ x 25 $\mu$m/654 $cm^2$ x day x bar (500 $cm^3$ x mil/100 sq in x day x atm). The oxygen and carbon dioxide permeability of at least the outer portion of the shell is below 200 $cm^3$ x 25 $\mu$m/654 $cm^2$ x day x bar (200 $cm^3$ x mil/100 sq in x day x atm) and the oxygen and carbon dioxide permeability of the plastic shell is at least 0.7 $cm^3$ x 25 $\mu$m/654 $cm^2$x day x bar (0.7 $cm^3$ x mil/100 sq in x day x atm) but preferably more than the oxygen and carbon dioxide permeability of the outer portion of the shell.

An outer layer may be made of a less permeable layer of the same plastics or a barrier material such as, but not limited to, ethylene vinyl alcohol ("EVAL"), polyvinylidene chloride (PVDC or "SARAN") or nylon. The function of an outer barrier layer is to prevent the carbon dioxide from leaking out of the sealed container and resulting in premature loss of $CO_2$ pressure and to prevent the diffusion of oxygen from the air into the plastics. An outer, less permeable layer of the same resin also serves to lower the rate of loss of $CO_2$ pressure.

A thin layer of barrier material is all that is necessary, if a barrier layer is desired. A thickness sufficient to prevent loss of $CO_2$ pressure is adequate, for example, a thickness of less than 10% of the total thickness of the container would suffice.

An outer layer of either type, when present, may be coextruded with the inner layer of plastics, applied as a spray, dip or brush coating, or applied by lamination.

In a modification, irradiation of the plastics will greatly enhance the rate of degradation at the desired time as compared to a non-irradiated polymer composition. Normally the requisite level of radiation to accelerate degradation is from 1 X $10^4$ to 2 X $10^5$ Gy, (1 to 20 megarads). Greater or lesser dosages of radiation may be employed depending upon the particular desired rate of degradation. Such sources include the van de Graaff accelerator, and cobalt 60. Other suitable modes of irradiation are, by way of example, ultraviolet lamp, sunlamp, swirl-flow plasma arc and mercury lamp. Any known radiation source can be used. This irradiation aspect of this invention is important in large volume plastics waste disposal units wherein the waste plastics is irradiated prior to exposure to the elements to provide an accelerated rate of degradation.

The container is filled to at least 80% by volume full with the desired carbonated beverage.

The container is then sealed under the appropriate pressure by any type of acceptable sealing methods such as end seaming and spin welding.

The carbonation of the selected carbonated beverage should be sufficient to provide a carbon dioxide pressure of at least 78 kPa (0.8 atm) within the container and preferably at least 98 kPa (1.0 atm) within the container but preferably no more than 590 kPa (6 atm). The more preferred range is from 245 to 440 kPa (2.5 to 4.5 atm). The carbonation of the beverage inhibits initiation of degradation by the degradant until the container is opened by the consumer, the carbon dioxide is released and at least the inner container wall is contacted by oxygen.

In a preferred embodiment the container of the invention is in the form of a sealed can or container with

EP 0 301 676 B1

acceptable creep, modulus, and yield strength values, wherein the plastics shell, or can body, is less than 2 mm (80 mils) thick and comprises; a core of coextruded, non-fibrous polypropylene; two layers of polypropylene which have each been monoaxially stretched to a tensile yield strength of above 55 MPa (8,000 psi) in any direction and to an elastic modulus of above $2.8 \times 10^9$ Pa (400,000 psi) in any one direction, one layer having been wrapped around the core singularly or in plys at an angle of from +50° to +60° and the other layer having been wrapped around said core singularly or in plys at an angle of from -50° to -60°; an adhesive layer between said polypropylene layers and between the inner of said polypropylene layers and said core; at least one layer of barrier material; and ends attached to said plastics shell. (See copending EPC Application 87310415.2).

The filled containers of the invention can be transported and stored in trucks, warehouses, supermarkets and consumer's homes until opened. When the container is opened, oxygen from the atmosphere enters the container and contacts the inner wall of the shell. This permits the start of degradation of the plastics, but of course the consumer has ample time to consume, and even store, the opened container before significant degradation takes place.

Used containers may then be collected and placed in an appropriate area which has access to light or thermal energy in order to speed up the rate of degradation of the containers. Any barrier layers on the containers will be insignificantly thin and should not pose any problems in disposal. Outer layers of some plastics of reduced permeability such as PVDC, will degrade in time, although at a slower rate.

The following Examples will serve to illustrate the invention.

Example 1

Eight sample plaques of compression polypropylene molded sheet were prepared. Samples 1-4 contained no degradant. Samples 5-8 contained 0.5% cerium stearate ($CeSt_3$) degradant, prepared by dry blending polypropylene with $CeSt_3$, and melt extruding to obtain homogeneous blends. The blends were compression molded into 1.5 mm (0.06 in) thick plaques at 204°C (400°F).

The plaques were bled by placing the plaques in a carbon dioxide chamber for two weeks to rid the plaques of trapped oxygen. Each plaque was mounted in a stainless steel cell which contained either $O_2$ or $CO_2$, with an inlet which allows pressurization with a particular gas, such that the inner side of the plaque was exposed to either air or $CO_2$ at 240 kPa (35 psi) and the other side of the plaque was exposed to simulated outdoor environmental conditions inside a Xenon weatherometer, so that the outside of the plaque was exposed to ultraviolet light. After either 175 or 325 hours exposure to a Xenon arc lamp, the plaques were evaluated for brittleness and cracking. The results are shown in the following Table.

## Table

| SAMPLE | %CeSt$_3$ | BARRIER? | INSIDE/OUTSIDE PLAQUE ENVIRONMENT | HOURS | DEGRADATION |
|---|---|---|---|---|---|
| 1 | 0 | No | air/air | 325 | No |
| 2 | 0 | No | $CO_2$/air | 325 | No |
| 3 | 0 | PVDC* | $CO_2$/air | 325 | No |
| 4 | 0 | PVDC | air/air | 325 | No |
| 5 | 0.5 | No | air/air | 175 | Yes,[1] |
| 6 | 0.5 | No | $CO_2$/air | 175 | Yes,[1] |
| 7 | 0.5 | PVDC | air/air | 175 | Yes,[2] |
| 8 | 0.5 | PVDC | $CO_2$/air | 325 | No |

*polyvinylidine chloride
[1] substantial embrittlement, dense and deep cracking
[2] extensive microcracking; embrittlement and fracture in an advanced stage

As may be seen from Table 1, Samples 1-4, which contained no degradant, did not degrade after 325 hours exposure to the Xenon arc lamp. Sample 5, which contained 0.5% CeSt3 degradant, was representative of an opened can where both the inside wall and the outside wall of the can are exposed to the Xenon arc lamp, substantial embrittlement and dense, deep cracking occurred. Sample 6, which also contained degradant, was representative of the unopened can where the inside can wall is exposed to $CO_2$ and the outside can wall is exposed to air. After only 175 hours, substantial embrittlement, and dense, deep cracking occurred since this polypropylene plaque was used without a barrier even though it has a permeability of greater than 200 cm$^3$ x 25 $\mu$m/654 cm$^2$ x day x bar (200 cm$^3$ x mil/100 sq in x day x atm). Sample 7 contained a degradant and an air/air exposure with a PVDC barrier. After only 175 hours, there was extensive microcracking, embrittlement and fracture in an advanced stage. This, plus a UV scan of PVDC shows that PVDC is active above 300 nanometers wavelength (nm) and that PVDC is not acting as a screen in the UV region. Sample 8 contained a degradant and a $CO_2$/air exposure with PVDC barrier. Even after 325 hours, no embrittlement or cracking occurred. This was representative of the sealed carbonated beverage can.

The plaques were bled by placing the plaques in a carbon dioxide chamber for two weeks to rid the plaques of trapped oxygen. One set of plaques (one of each concentration) was coated with 25 $\mu$m (1 mil) of the barrier polyvinylidine chloride (PVDC). The plaques coated with PVDC, as well as one set of three of the plaques not coated with PVDC were mounted in a stainless steel carbon dioxide cell. This cell was designed with a window frame and an inlet which allows pressurization with a particular gas such as $CO_2$. The six plaques in the cell were brought to a pressure of 240 kPa (35 psi) (at the 38°C (100°F) weatherometer conditions, pressure equalling approximately 345 kPa (50 psi) which is typical for carbonated beverages). The cell was mounted in a Xenon weatherometer which simulated the outdoor environmental conditions so that the window frame of the cell receives proper exposure to ultraviolet light. In addition, a set of the three other plaques (without PVDC coating) were also placed within the weatherometer but outside of the cell to expose them to the air. After 185 hours (7.7 days) in the weatherometer, the cell had a remaining pressure of 170 kPa (25 psi). The decrease from 240 kPa (35 psi) to 170 kPa (25 psi) is probably due to natural seepage of carbon dioxide through the window. However, the plaques with the PVDC barrier did not show evidence of apparent degradation in the cell. The plaques inside the cell without the PVDC barrier were extensively cracked in a spider web fashion and easily fragmented. The more cerium stearate within the plaques, the faster the apparent degradation. The cracks of the plaques in the cell without PVDC were more noticeable and extensive than those outside of the cell; this is because the films were stressed by the $CO_2$ pressure in the cell, which aggravated the cracking and degradation.

Example 2

A core is made of coextruded, non-fibrous polypropylene. Two layers of polypropylene are monoaxially stretched to a tensile strength of above 55 MPa (8000 psi) in any one direction and to an elastic modulus of above 2.8 X $10^9$ MPa (400,000 psi) in any one direction. One layer is wrapped around the core in plys at an angle of -55°. An adhesive layer is applied to the polypropylene layers to adhere the layers to each other and to the core. A barrier layer is also included. The core, polypropylene and adhesive make up the can body. An end is then spin welded onto the can body; the container is filled to 80% full with carbonated beverage and the remaining end is spin welded on.

When the container is opened and the beverage removed, the inner portion of the shell is exposed to oxygen and the container degrades at a reasonable rate.

**Claims**

1. A sealed container which is at least 80% by volume full of a carbonated beverage, the amount of carbonation of said beverage being sufficient to provide a carbon dioxide pressure of at least 78 kPa (0.8 atm) within said container, which container comprises a degradable plastics shell wherein the oxygen and carbon dioxide permeability of at least the outer portion of the shell is below 200 $cm^3$ x 25 $\mu$m/654 $cm^2$ x day x bar (200 $cm^3$ x mil/100 sq.in x day x atm) and the oxygen and carbon dioxide permeability of said shell is at least 0.7 $cm^3$ x 25 $\mu$m/654 $cm^2$ x day x bar (0.7 $cm^3$ x mil/100 sq.in x day x atm).

2. A container according to claim 1, wherein said plastics shell is of polypropylene.

3. A container according to claim 1 or 2 wherein the plastics shell contains a degradant.

4. A container according to claim 3, wherein said degradant is a cerium salt of a monobasic carboxylic acid.

5. A container according to claim 4 wherein said degradant is cerium stearate.

6. A container according to claim 3, 4 or 5 wherein the amount of degradant is from 100 to 10,000 parts per million by weight of said plastics shell.

7. A container according to any one of the preceding claims wherein said plastics shell comprises an inner plastics layer and an outer barrier layer contiguous therewith.

8. A container according to claim 7, wherein said inner plastics layer has a permeability of Px and where said outer barrier layer has a permeability of Py, where Py < Px and where Px is no greater than 500 $cm^3$ x 25 $\mu$m/654 $cm^2$ x day x bar (500 $cm^3$ x mil/100 sq in x day x atm).

9. A container according to claim 7 or 8 wherein the plastics shell is less than 2 mm (80 mils) thick and comprises; a core of coextruded, non-fibrous polypropylene; two layers of polypropylene which have each been monoaxially stretched to a tensile yield strength of above 55 MPa (8,000 psi) in any one direction and to an elastic modulus of above 2.8 $\times$ $10^9$ Pa (400,000 psi) in any one direction, one layer having been wrapped around the core singularly or in plys at an angle of from +50° to +60° and the other layer having been wrapped around said core singularly or in plys at an angle of from -50° to -60°; an adhesive layer between said polypropylene layers and between the inner of said polypropylene layers and said core; at least one layer of barrier material; and ends attached to said plastics shell.

**Patentansprüche**

1. Ein dichter, wenigstens zu 80 Vol.-% mit einem kohlensäurehältigen Getränk gefüllter Behälter, wobei die Kohlensäuremenge des Getränkes ausreicht, um einen Kohlendioxiddruck von wenigstens 78 kPa (0,8 atm) innerhalb des Behälters zu ergeben, welcher Behälter einen abbaubaren Kunststoffmantel umfaßt, worin die Sauerstoff- und Kohlendioxidpermeabilität wenigstens des Außenteils des Mantels unter 200 cm$^3$ x 25 $\mu$m/654 cm$^2$ x Tag x bar (200 cm$^2$ x mil/100 Quadratzoll x Tag x Atmosphäre) liegt und die Sauerstoff- und Kohlendioxidpermeabilität dieses Mantels wenigstens 0,7 cm$^3$ x 25 $\mu$m/654 cm$^2$ x Tag x bar (0,7 cm$^3$ x mil/100 Quadratzoll x Tag x Atm.) beträgt.

2. Behälter nach Anspruch 1, worin der Kunstoffmantel aus Polypropylen besteht.

3. Behälter nach Anspruch 1 oder 2, worin der Kunststoffmantel ein Abbaumittel enthält.

4. Behälter nach Anspruch 3, worin des Abbaumittel ein Cersalz einer einbasischen Carbonsäure ist.

5. Behälter nach Anspruch 4, worin des Abbaumittel Cerstearat ist.

6. Behälter nach Anspruch 3, 4 oder 5, worin die Abbaumittelmenge von 100 bis 10.000 Teile je Million Gewichtsteile des Kunststoffmantels beträgt.

7. Behälter nach einem der vorstehenden Ansprüche, worin der Kunststoffmantel eine innere Kunststoffschicht und eine daran anliegende äußere Sperrschicht umfaßt.

8. Behälter nach Anspruch 7, worin die innere Kunststoffschicht eine Permeabilität Px und die äußere Sperrschicht eine Permeabilität Py aufweisen, worin Py Px ist und worin Px nicht über 500 cm$^3$ x 25 $\mu$m/654 cm$^2$ x Tag x bar (500 cm$^3$ x mil/100 Quadratzoll x Tag x Atm.) liegt.

9. Behälter nach Anspruch 7 oder 8, worin der Kunststoffmantel weniger als 2mm (80 mil) stark ist und einen Kern aus co-extrudiertem, nicht-faserigem Polypropylen; zwei Lagen aus Polypropylen, die jeweils monoaxial bis auf eine Zugfestigkeit von über 55 MPa (8 000 psi) in jeder beliebigen Richtung und einen Elastizitätsmodul von über 2,8 x 10$^9$ Pa (400 000 psi) in jeder beliebigen Richtung gestreckt worden sind, wobei eine Lage allein oder mehrlagig unter einem Winkel von + 50° bis + 60° um den Kern gewickelt worden ist und die andere Lage allein oder mehrlagig unter einem Winkel von -50° bis -60° um den Kern gewickelt worden ist; eine Klebstoffschicht zwischen den Polypropylenlagen und zwischen der inneren der Polypropylenlagen und dem Kern; wenigstens eine Lage aus einem Sperrmaterial; und mit dem Kunststoffmantel verbundene Endteile umfaßt.

**Revendications**

1. Un récipient étanche qui est au moins à 80% en volume rempli d'une boisson gazeuse, le taux de carbonation de ladite boisson étant suffisant pour obtenir une pression de dioxyde de carbone d'au moins 78 kPa (0,8 atm) à l'intérieur dudit récipient, ce récipient comportant une enveloppe dégradable en matière plastique, dans laquelle la perméabilité à l'oxygène et au dioxyde de carbone d'au moins la partie extérieure de l'enveloppe est inférieure à 200 cm$^3$ x 25 $\mu$m/654 cm$^2$ x jour x bar (200 cm$^3$ x mil/100 pouces carrés x jour x atm) et la perméabilité à l'oxygène et au dioxyde de carbone de ladite enveloppe est d'au moins 0,7 cm$^3$ x 25 $\mu$m/654 cm$^2$ x jour x bar (0,7 cm$^3$ x mil/100 pouces carrés x jour x atm).

2. Un récipient selon la revendication 1, dans lequel ladite enveloppe en matière plastique est en polypropylène.

3. Un récipient selon la revendication 1 ou 2, dans lequel l'enveloppe en matière plastique renferme un agent de dégradation.

4. Un récipient selon la revendication 3, dans lequel ledit agent de dégradation est un sel de cérium d'un acide carboxylique monobasique.

5. Un récipient selon la revendication 4, dans lequel ledit agent de dégradation est le stéarate de cérium.

EP 0 301 676 B1

**6.** Un récipient selon la revendication 3, 4 ou 5, dans lequel la quantité d'agent de dégradation est de 100 à 10.000 parties par million en poids de ladite enveloppe en matière plastique.

**7.** Un récipient selon l'une quelconque des revendications précédentes, dans lequel ladite enveloppe en matière plastique comprend une couche interne en matière plastique et une couche barrière externe contiguës l'une à l'autre.

**8.** Un récipient selon la revendication 7, dans lequel ladite couche interne en matière plastique présente une perméabilité de Px et dans laquelle ladite couche barrière externe présente une perméabilité de Py, Py < Px et Px n'étant pas plus grand que 500 cm$^3$ x 25 $\mu$m/654 cm$^2$ x jour x bar (500 cm$^3$ x mil/100 pouces carrés x jour x atm).

**9.** Un récipient selon la revendication 7 ou 8, dans lequel l'enveloppe en matière plastique présente une épaisseur inférieure à 2 mm (80 mils) et comporte un noyau de polypropylène non-fibreux, co-extrudé; deux couches de polypropylène qui ont été chacune étirée dans la direction monoaxiale jusqu'à une limite d'étirage supérieure à 55 MPa (8.000 psi) dans l'une quelconque des directions et jusqu'à un module élastique supérieur à 2,8 x 10$^9$ Pa (400.000 psi) dans une direction quelconque, une couche ayant été enroulée autour dudit noyau en une passe ou par couches selon un angle de +50° à +60° et l'autre couche ayant été enroulée autour dudit noyau en une passe ou en couches selon un angle de -50° à -60°; une couche adhésive entre lesdites couches de polypyropylène et entre la couche interne desdites couches en polypropylène et ledit noyau; au moins une couche de matériau barrière; et des extrémités fixées à ladite enveloppe en matière plastique.

9